# EUROPÄISCHE PATENTSCHRIFT

(11) **EP 0 676 181 B1**
(45) Veröffentlichungstag und Bekanntmachung des Hinweises auf die Patenterteilung: **30.06.1999**
(21) Anmeldenummer: 95104920.4
(22) Anmeldetag: 03.04.1995
(51) Int. Cl.: A61C 15/04

(54) **Vorrichtung zum Reinigen der Zahnzwischenräume mittels Zahnseide**
Interdental cleaning device using dental floss
Dispositif pour nettoyer les interstices dentaires au moyen de soie dentaire

(30) Priorität: 07.04.1994 DE 4411923
(43) Veröffentlichungstag der Anmeldung: 11.10.1995
(73) Patentinhaber: Wüster, Dirk, D-42699 Solingen (DE)
(72) Erfinder: Wüster, Dirk, D-42699 Solingen (DE)
(74) Vertreter: Rehders, Jochen, Dipl.-Ing.

(56) Entgegenhaltungen:
- GB-A- 1 131 864
- US-A- 2 870 773
- US-A- 3 847 168
- US-A- 3 871 393
- US-A- 3 903 907
- US-A- 3 908 678
- US-A- 3 924 647
- US-A- 3 949 769
- US-A- 4 004 597

## Beschreibung

Die Erfindung betrifft eine Vorrichtung zum Reinigen der Zahnzwischenräume mittels Zahnseide mit einem Griffteil, einer Vertiefung im Griffteil als Aufnahme für eine Zahnseidenspule, einem gabelartigen Ende mit zwei beabstandeten Zinken und Nuten in den Zinkenenden zum Umschlingen eines Zahnseidenstrangs.

Eine Vorrichtung gemäß dem Oberbegriff von Anspruch 1 ist in dem US-Patent 3 871 393 beschrieben. Die Zahnseidenspule wird in einer mittels eines Deckels verschließbaren Vertiefung im Griffteil aufgenommen. Der Zahnseidenstrang wird von einer ersten Nut im Griffteil aufgenommen und zu einer ersten Zinke geführt. Dort wird der Zahnseidenstrang um das Zinkenende in darin angeordneten Nuten geschlungen, zur zweiten Zinke geführt und dort ebenfalls um das Zinkenende in Nuten geschlungen sowie in einer weiteren, im Griffteil angeordneten Nut in Richtung der Vertiefung für die Zahnseidenspule zurückgeführt. In der Ebene der Nuten für die Zahnseidenstränge ist ein in dieser Ebene in Schwalbenschwanzführungen quer zum Griffteil verschiebbarer Klemmteil angeordnet. Der zur ersten Zinke hinführende Zahnseidenstrang wird durch eine Bohrung dieses Klemmteils geführt, während der von der zweiten Zinke wegführende Zahnseidenstrang durch die Schwalbenschwanzführung des Klemmteils verläuft.

Um die Vorrichtung zum Reinigen der Zahnzwischenräume vorzubereiten, wird eine Zahnseidenspule in die Vertiefung im Griffteil eingelegt und diese mit dem Deckel verschlossen. Ein Zahnseidenstrang wird durch die zur ersten Zinke führende Nut geführt und durch die Bohrung in dem seitlich herausgeschobenen Klemmteil hindurchgefädelt. Dann wird der Zahnseidenstrang zum ersten Zinkenende geführt, ein- oder zweimal um das Zinkenende geschlungen, zum zweiten Zinkenende hinübergeführt, dort ebenfalls ein- oder zweimal um das Ende geschlungen und durch die Nut in Richtung der Aufnahme für die Zahnseidenspule geführt. Zwischen dem Klemmteil und der Aufnahme für die Zahnseidenspule ist ein zugeschärfter Schlitz angeordnet, an dem sich ein überschüssiges Zahnseidenstrangteil abschneiden läßt. Der Klemmteil wird nunmehr in die Schwalbenschwanzführungen geschoben und klemmt dabei beide Zahnseidenstränge ein, so daß der freie Zahnseidenstrang zwischen den Zinkenenden gespannt ist und zum Reinigen der Zahnzwischenräume zur Verfügung steht. Ist dieser Zahnseidenstrang durch die Benutzung verbraucht oder gerissen, wird der Klemmteil in seiner Schwalbenschwanzführung quer aus dem Griffteil ausgeschoben, wonach sich der Zahnseidenstrang von den Zinkenenden lösen und ein neues Stück herausziehen läßt. Die Befestigung des Zahnseidenstranges und das Einklemmen erfolgt in der bereits beschriebenen Weise.

Bei dieser bekannten Vorrichtung ist die Handhabung des Klemmteils umständlich. Zum einen ist es nicht einfach, den sehr weichen Zahnseidenstrang durch die recht lange Bohrung im Klemmteil hindurch zu fädeln, zum anderen verbleiben die Zahnseidenstränge beim Umschlingen der Zinkenenden nicht immer in ihren Nuten im Griffteil, so daß sie sich durch Querverschieben des Klemmteils nicht festklemmen lassen, sondern vielmehr umständlich in die Nuten und den Bereich der Schwalbenschwanzführung eingelegt werden müssen, bevor ein Festklemmen durch Querverschieben des Klemmteils erfolgen kann.

Der Erfindung liegt die Aufgabe zugrunde, die eingangs erwähnte Vorrichtung in der Herstellung zu vereinfachen und in der Handhabung zu verbessern.

Ausgehend von dieser Aufgabenstellung wird bei einer Vorrichtung der eingangs erwähnten Art vorgeschlagen, daß sie einen senkrecht zur durch das gabelartige Ende mit den Zinken verlaufenden Ebene verschiebbaren, wenigstens den von den Zinken wegführenden Zahnseidenstrang einklemmenden Stopfen zum Verschließen der Vertiefung für die Zahnseidenspule aufweist.

Statt eines in der durch das gabelartige Ende der Zinken verlaufende Ebene verschiebbaren Klemmteils wird somit erfindungsgemäß ein senkrecht zu dieser Ebene verschiebbarer Stopfen verwendet. Dieser Stopfen benötigt keine Schwalbenschwanzführungen, so daß der Griffteil und der Stopfen einfach aus Kunststoff zu fertigen sind. Des weiteren werden die Zahnseidenstränge beim Einklemmen nicht mehr quer zu den Zahnseidennuten in dem Griffteil bewegt und können daher auch nicht aus den Nuten herausspringen. Auch erfordert der erfindungsgemäß senkrecht zur durch das gabelartige Ende mit den Zinken verlaufende Ebene verschiebbare Stopfen keine Bohrungen für den Zahnseidenstrang, so daß Schwierigkeiten mit dem Einfädeln entfallen.

Vorzugsweise kann der Stopfen sowohl den zu den Zinken hinführenden als auch den von den Zinken wegführenden Zahnseidenstrang einklemmen, jedoch ist dies nicht zwingend erforderlich, wenn der von der Zahnseidenspule abzuziehende Zahnseidenstrang gut festgehalten wird, was durch den die Aufnahme für die Zahnseidenspule verschließenden Deckel geschieht.

Bei der einfachsten Ausführungsform kann der die Zahnseidenstränge einklemmende Stopfen durch einen die Vertiefung für die Zahnseidenspule verschließenden Deckel gebildet sein, wenn der Stopfen aus einem zylindrischen, in die Vertiefung mit Klemmung einschiebbaren Teil und einem daran anschließenden Deckelteil mit radialem Überstand besteht und am Rand der Vertiefung im Griffteil eine Anfasung oder im an den Deckelteil angrenzenden zylindrischen Teil eine Ringnut zur Aufnahme des von den Zinken wegführenden, wenigstens einmal um den zylindrischen Teil geschlungenen Zahnseidenstrangs vorhanden ist. Bei dieser Ausführungsform wird der die Vertiefung für die Zahnseidenspule verschließende Deckel etwas gelüftet, um einen Zahnseidenstrang von der Spule abziehen zu können. Dieser Zahnseidenstrang wird in die Nut im Griffteil gelegt und zur ersten Zinke geführt sowie um das Zinkenende geschlungen. Danach wird der Zahnseidenstrang zum anderen Zinkenende geführt, ebenfalls um dieses geschlungen und durch die zweite Nut im Griffteil zur Vertiefung für die Zahnseidenspule zurückgeführt. Hier wird der Zahnseidenstrang ein- oder mehrmals um den zylindrischen Teil geschlungen, so daß der um diesen Teil geschlungene Zahnseidenstrang die Ringnut zwischen dem zylindrischen Teil und dem radial überstehenden Deckelteil ausfüllt. Wird nun der Deckelteil wieder in die Aufnahme für die Zahnseidenspule hineingedrückt, wird der um den zylindrischen Teil geschlungene Zahnseidenstrang eingeklemmt.

Der zur ersten Zinke hinführende Zahnseidenstrang läßt sich leicht aus der Aufnahme für die Zahnseidenspule herausziehen und einklemmen, wenn der zylindrische Teil auf seinem Außenumfang eine sich vom Ende zum Deckelteil hin verjüngende und flacher werdende Nut für den Zahnseidenstrang aufweist, die im Bereich der Nut im Griffteil mündet. Selbstverständlich kann eine entsprechende Nut auch in der Wand der Vertiefung im Griffteil angeordnet sein, die als Aufnahme für die Zahnseidenspule dient. Ebenso ist es möglich, durch den zylindrischen Teil benachbart zum Deckelteil eine Radialbohrung zu führen und durch diese Bohrung den Zahnseidenstrang hindurchzufädeln. Da es sich hierbei um eine sehr kurze Bohrung handelt, bereitet es keine Schwierigkeiten, den Zahnseidenstrang durch diese Bohrung hindurch zu fädeln.

Um das Lockern des Stopfens zum Durchziehen eines Zahnseidenstrangs zu erleichtern, kann am Stopfen oder am Griffteil eine Vertiefung zum Untergreifen und Herausbewegen des Stopfens angeordnet sein. Ebenso ist es möglich, den Stopfen mit einem durch eine Bohrung in der Vertiefung für die Zahnseidenspule über die Rückseite hinausragenden Fortsatz zu versehen, der zum Herausdrücken des Stopfens dient. In diesem Fall ist es vorteilhaft, wenn der Fortsatz einen Radialvorsprung als Herausfallsicherung aufweist.

Die Erfindung wird nachstehend anhand eines in der Zeichnung dargestellten Ausführungsbeispiels des näheren erläutert. In der Zeichnung zeigen:
- Fig. 1: eine perspektivische, auseinandergezogene Darstellung einer Vorrichtung und
- Fig. 2: einen Längsschnitt durch die Vorrichtung gemäß Fig. 1.

Die Vorrichtung besteht aus einem Griffteil 18 mit einer Aufnahme 19 an einem Ende, in deren Vertiefung 20 eine Zahnseidenspule 25 eingelegt wird. Das andere Ende des Griffteils 18 weist zwei Zinken 21 auf, um deren Enden Nuten 22 geführt sind. Von der Vertiefung 20 zu den Zinken 21 führen etwa parallele Nuten 23, 24 im Griffteil 18. Nach dem Einlegen einer Zahnseidenspule 25 in die Vertiefung 20 wird ein Zahnseidenstrang 26 aus der Vertiefung 20 herausgeführt und in die Nut 23 eingelegt. Dieser Zahnseidenstrang wird im Bereich des Endes der ersten Zinke 21 in die Nut 22 gelegt und mehrmals um das Zinkendende geschlungen. Von der ersten Zinke 21 wird ein Zahnseidenstrang 27 zur zweiten Zinke 21 geführt und dort ebenfalls in die Nut 22 eingelegt und mehrfach um das Zinkenende geschlungen. Von dort gelangt der Zahnseidenstrang eingelegt in die Nut 24 bis in den Bereich der Vertiefung 20 für die Zahnseidenspule 25 zurück.

Ein Deckel für die Vertiefung 20 wird durch einen zylindrischen Teil 29 und einen gegenüber dem zylindrischen Teil 29 radial überstehenden Deckelteil 28 gebildet. Zwischen dem Deckelteil 28 und dem zylindrischen Teil 29 ist eine schmale Ringnut 30 angeordnet. Ein zylindrischer, zum zylindrischen Teil 29 koaxialer Fortsatz 31 ist durch eine Bohrung 36 im Boden der Vertiefung 20 für die Zahnseidenspule 25 geführt und durch einen radialen Vorsprung 32 gegen Herausfallen gesichert.

Statt der Ringnut zwischen dem Deckelteil 28 und dem zylindrischen Teil 29 kann der obere Rand der Vertiefung 20 eine zum zylindrischen Teil 29 gerichtete Anfasung aufweisen.

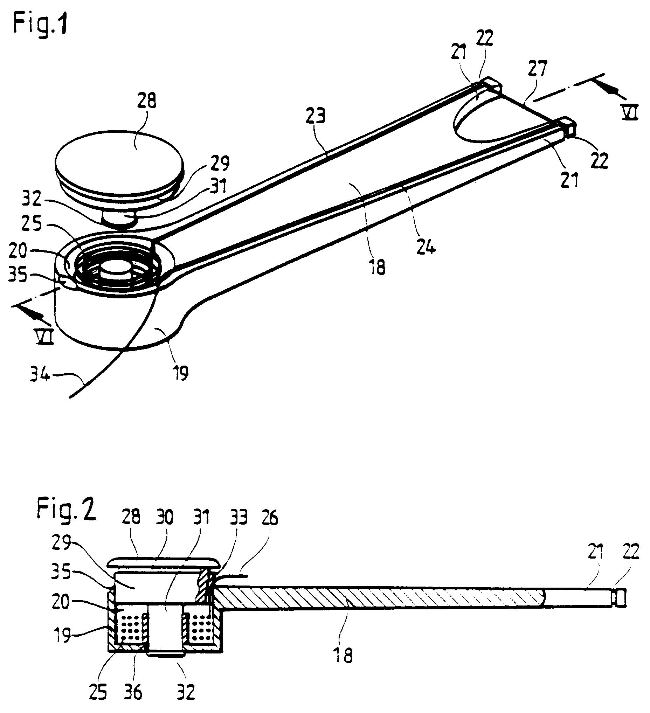

Die Fig. 1 stellt das Einlegen einer Zahnseidenspule 25 in die Vertiefung 20 bei vollständig abgenommenen Deckel 28, 29, 31 dar. Nach dem Einlegen der Zahnseidenspule 25 und des Zahnseidenstranges in die Nuten 23, 24 sowie nach dem Umschlingen der Enden der Zinken 21 verbleibt ein freier Zahnseidenstrang 34, der, nachdem der Deckel 28, 29, 31 in die in Fig. 2 gezeigte Stellung gebracht wurde, in die Nut 30 eingewickelt wird. Wird nun der zylindrische Teil 29 so weit in die Aufnahme 20 hineingedrückt, daß der Deckelteil 28 auf der Oberseite des Griffteils 18 aufliegt, werden sowohl der Zahnseidenstrang 26, der zur ersten Zinke 21 hinführt, als auch der zweite Zahnseidenstrang 34, der von der zweiten Zinke 21 zurück zur Aufnahme 19 führt, festgeklemmt, so daß sich die Vorrichtung zum Reinigen der Zahnzwischenräume benutzen läßt.

Ist der Zahnseidenstrang 27 zwischen den Zinken 21 abgenutzt oder gerissen, wird der Deckelteil 28 mit dem zylindrischen Teil 29 in die in Fig. 2 dargestellte Stellung gebracht, indem der Fortsatz 31 so weit in die Bohrung 36 hineingedrückt wird, daß der radiale Vorsprung 32 daran zur Anlage kommt. Dieser radiale Vorsprung 32 verhindert ein gänzliches Herausfallen des Deckelteils 28 mit dem zylindrischen Teil 29 und dem Fortsatz 31, wenn ein neues Stück Zahnseide von der Spule 25 abgezogen werden soll.

Der Zahnseidenstrang 26 läßt sich durch eine auf dem Außenumfang des zylindrischen Teils 29 angeordnete, sich vom Ende zum Deckelteil 28 hin verjüngende und flacher werdende Nut 33 führen, so daß das Herausziehen in der in Fig. 2 dargestellten Stellung erleichtert wird, dieser Strang 26 bei eingedrücktem zylindrischen Teil 29 jedoch festgeklemmt wird.

Statt eine solche Axialnut im zylindrischen Teil 29 anzuordnen, läßt sich eine entsprechende Axialnut, wie in Fig. 1 dargestellt, auch in der Wand der Vertiefung 20 anordnen.

Ebenso ist es möglich, statt dieser Axialnuten eine Radialbohrung im zylindrischen Teil 29 im Bereich der Ringnut 30 vorzusehen, durch die sich der Strang 26 hindurchfädeln läßt.

Die erfindungsgemäße Vorrichtung besteht aus nur zwei einfach gestalteten Teilen und läßt sich mittels einfach gestalteter Spritzgußformen rationell herstellen.

Statt des Fortsatzes 31 zum Herausdrücken des zylindrischen Teils 29 mit dem Deckelteil 28 läßt sich auch an der Aufnahme 19 eine Vertiefung 35 anordnen, so daß sich der Deckelteil 28 mit dem Daumennagel oder einem anderen Gerät untergreifen und anheben läßt.

## Patentansprüche

1. Vorrichtung zum Reinigen der Zahnzwischenräume mittels Zahnseide mit
- einem Griffteil (18),
- einer Vertiefung (20) im Griffteil (18) als Aufnahme für eine Zahnseidenspule (25),
- einem gabelartigen Ende mit zwei beabstandeten Zinken (21),
- Nuten (22) in den Zinkenenden zum Umschlingen eines Zahnseidenstrangs (27) und
- einem senkrecht zur durch das gabelartige Ende mit den Sinken (21) verlaufenden Ebene verschiebbaren Stopfen (29) zum Verschließen der Vertiefung für die Zahnseidenspule (25), dadurch gekennzeichnet, daß mit dem Stopfen (29) zum Verschließen der Vertiefung für die Zahnseidenspule (25) wenigstens der von den Zinken (21) wegführende Zahnseidenstrang (34) einzuklemmen ist.

2. Vorrichtung nach Anspruch 1, **dadurch gekennzeichnet,** daß der Stopfen (29) sowohl den zu den Zinken (21) hinführenden als auch den von den Zinken (21) wegführenden Zahnseidenstrang (34) einklemmt.

3. Vorrichtung nach Anspruch 1 oder 2 **dadurch gekennzeichnet,** daß der Stopfen aus einem zylindrischen, in die Vertiefung (20) mit Klemmung einschiebbaren Teil (29) und einem daran anschließenden Deckelteil (28) mit radialem Überstand besteht und am Rand der Vertiefung (20) im Griffteil (18) eine Anfasung oder im an den Deckelteil (28) angrenzenden zylindrischen Teil (29) eine Ringnut (30) zur Aufnahme des von den Zinken (21) wegführenden, wenigstens einmal um den zylindrischen Teil (29) geschlungenen Zahnseidenstrangs (34) vorhanden ist.

4. Vorrichtung nach Anspruch 3,**dadurch gekennzeichnet,** daß der zylindrische Teil (29) auf seinem Außenumfang eine sich vom Ende zum Deckelteil (28) hin verjüngende und flacher werdende Nut (33) für den Zahnseidenstrang (26) aufweist.

5. Vorrichtung nach Anspruch 3, **dadurch gekennzeichnet,** daß der zylindrische Teil (29) benachbart zum Deckelteil (28) eine Radialbohrung zum Durchführen des Zahnseidenstrangs (26) aufweist.

6. Vorrichtung nach einem oder mehreren der Ansprüche 1 bis 5, **dadurch gekennzeichnet,** daß am Stopfen oder am Griffteil (18) eine Vertiefung (35) zum Untergreifen und Herausbewegen des Stopfens (28, 29) angeordnet ist.

7. Vorrichtung nach einem oder mehreren der Ansprüche 1 bis 5, **dadurch gekennzeichnet,** daß der Stopfen (29) einen durch eine Bohrung (36) in der Aufnahme über die Rückseite hinausragenden Fortsatz (31) zum Herausdrücken des Stopfens (29) aufweist.

8. Vorrichtung nach Anspruch 7 **dadurch gekennzeichnet,** daß der Fortsatz (31) einen radialen Vorsprung (32) als Herausfallsicherung aufweist.

## Claims

1. An interdental cleaning device using dental floss, comprising
- a handle part (18),
- a recess (20) in the handle part (18) for receiving a reel (25) of dental floss,
- a fork-like end with two spaced-apart prongs (21),
- grooves (22) in the prong ends for a strand (27) of dental floss to wind around, and
- a plug (29), displaceable at right-angles to the plane extending through the fork-like end with the prongs (21), for closing off the recess for the reel (25) of dental floss, characterised in that at least that strand (34) of dental floss which leads away from the prongs (21) can be clamped with the plug (29) for closing off the recess for the reel (25) of dental floss.

2. A device according to Claim 1, characterised in that the plug (20) clamps both the strand (34) of dental floss leading to the prongs (21) and the one leading away from the prongs (21).

3. A device according to Claim 1 or 2, characterised in that the plug consists of a cylindrical part (29) which can be inserted in clamping manner into the recess (20) and a cover part (28) adjoining it with a radial projecting length and a chamfer is present on the edge of the recess (20) in the handle part (18) or an annular groove (30) is present in the cylindrical part (29) adjoining the cover part (28) for receiving the strand (34) of dental floss leading away from the prongs (21), which is wound at least once around the cylindrical part (29).

4. A device according to Claim 3, characterised in that the cylindrical part (29) has on its outer periphery a groove (33) for the strand (26) of dental floss which tapers and becomes flatter from the end towards the cover part (28).

5. A device according to Claim 3, characterised in that the cylindrical part (29) has adjacent to the cover part (28) a radial bore for passing the strand (26) of dental floss through.

6. A device according to one or more of Claims 1 to 5, characterised in that a recess (35) for gripping underneath and moving out the plug (28, 29) is located on the plug or on the handle part (18).

7. A device according to one or more of Claims 1 to 5, characterised in that the plug (29) has an extension (31) projecting beyond the rear side through a bore (36) in the recess for pushing out the plug (29).

8. A device according to Claim 7, characterised in that the extension (31) has a radial projection (32) as protection against dropping-out.

## Revendications

1. Dispositif destiné à nettoyer les interstices interdentaires au moyen d'une soie à dents comportant
- un élément formant poignée (18), un renfoncement (20) dans l'élément formant poignée (18) servant à recevoir une bobine de soie à dents (25),
- une extrémité en fourche avec deux dents (21) espacées,
- des rainures (22) dans les extrémités des dents pour enrouler un brin de soie à dents (27) et
- un bouchon (29) coulissant perpendiculairement au plan passant par l'extrémité en fourche avec les dents (21), destiné à fermer le renfoncement pour la bobine de soie à dents (25), caractérisé en ce qu'au moins le brin de soie à dents (34) s'éloignant des dents (21) doit être bloqué avec le bouchon (29) servant à fermer le renfoncement pour la bobine de soie à dents (25).

2. Dispositif selon la revendication 1, caractérisé en ce que le bouchon (29) bloque aussi bien le brin de soie (34) à dents menant aux dents (21) que le brin de soie à dent (34) s'éloignant des dents (21).

3. Dispositif selon la revendication 1 ou 2, caractérisé en ce que le bouchon est constitué d'une partie cylindrique (29), à introduire dans le renfoncement (20) avec serrage et d'une partie formant couvercle (28), à raccorder à la première, avec porte-à-faux radial et en ce que sur le bord du renfoncement (20), dans l'élément formant poignée (18), est prévu un chanfrein, ou dans la partie cylindrique (29), limitrophe de la partie formant couvercle (28), est ménagée une rainure annulaire (30) destinée à recevoir le brin de soie à dents (34) s'éloignant des dents (21), entourant au moins une fois la partie cylindrique (29).

4. Dispositif selon la revendication 3, caractérisé en ce que la partie cylindrique (29) présente, sur son pourtour extérieur, une rainure (33) se rétrécissant et devenant plus plate, depuis d'extrémité jusqu'à la partie formant couvercle (28), pour le brin de soie à dents (26).

5. Dispositif selon la revendication 3, caractérisé en ce que la partie cylindrique (29) présente, au voisinage de la partie formant couvercle (28), un perçage radial pour le passage du brin de soie à dents (26).

6. Dispositif selon une ou plusieurs des revendications 1 à 5, caractérisé en ce que sur le bouchon ou l'élément formant poignée (18) est prévu un renfoncement (35) passant sous le bouchon (28, 29) et destiné à le faire sortir.

7. Dispositif selon une ou plusieurs des revendications 1 à 5, caractérisé en ce que le bouchon (29) présente un prolongement (31) dépassant de la face arrière, par un perçage (36) pratiqué dans le logement, destiné à faire sortir le bouchon (29) par pression.

8. Dispositif selon la revendication 7, caractérisé en ce que le prolongement (31) présente une saillie radiale (32) servant de protection contre une chute à l'extérieur.
